# FASCICULE DE BREVET EUROPEEN

(11) **EP 2 244 897 B1**
(45) Date de publication et mention de la délivrance du brevet: **07.09.2011**
(21) Numéro de dépôt: 09706397.8
(22) Date de dépôt: 27.01.2009
(51) Int. Cl.: B60J 5/10, B60J 10/08

(54) **OUVRANT ARRIERE ETANCHE**
BLATT FÜR EINE VERSIEGELTE HINTERÖFFNUNG
SEALED REAR OPENING LEAF

(30) Priorité: 28.01.2008 FR 0850506
(43) Date de publication de la demande: 03.11.2010
(73) Titulaire: Compagnie Plastic Omnium, 69007 Lyon (FR)
(72) Inventeur: RAJON, Alexis, F-69004 Lyon (FR)
(74) Mandataire: Remy, Vincent Noel Paul
(86) Numéro de dépôt international: PCT/FR2009/050117
(87) Numéro de publication internationale: WO 2009/095608

(56) Documents cités:
- EP-A- 1 685 993
- DE-A1- 4 444 406
- DE-A1- 10 241 046
- DE-A1- 19 639 280
- DE-A1-102005 011 075
- DE-A1-102005 044 111
- US-A1- 2003 019 161
- US-A1- 2005 168 009

## Description

L'invention concerne un ouvrant arrière de véhicule automobile réalisé par assemblage de deux panneaux interne et externe.

L'ouvrant arrière peut être à axe de pivotement horizontal ou à axe de pivotement vertical. Dans le cas d'un ouvrant arrière à pivotement horizontal, cet axe peut être situé en partie supérieure de l'ouvrant (on parle alors parfois de hayon) ou en partie inférieure de l'ouvrant (on parle alors parfois de ridelle).

On connaît un ouvrant arrière fabriqué comprenant un panneau interne rigide et structurel réalisé par exemple en thermoplastique mélangé à des fibres de verre ou thermodurcissable, et un panneau externe d'aspect, parfois appelé peau, réalisé par exemple en thermoplastique. Les panneaux interne et externe sont assemblés l'un à l'autre et définissent ainsi un volume intérieur de l'ouvrant.

Différents éléments fonctionnels tels qu'un moteur d'essuie-glace peuvent être logé dans le volume intérieur de l'ouvrant. Ces éléments fonctionnels sont généralement sensibles à la poussière ou à l'humidité et il est donc recommandé de les protéger.

Une solution connue consiste à isoler le volume intérieur de l'ouvrant en disposant en périphérie de ce volume un matériau étanche de jonction intercalé entre les deux panneaux. Ce matériau peut être par exemple un ruban de colle. Le montage d'un tel ouvrant nécessite donc une étape préliminaire de dépose du matériau de jonction sur l'un ou l'autre des panneaux interne et externe avant leur assemblage.

L'invention a notamment pour but de proposer un ouvrant arrière dont le volume intérieur est isolé et dont la fabrication est simple, rapide et peu coûteuse.

A cet effet, l'invention a pour objet un ouvrant arrière de véhicule automobile, comprenant :
- un panneau externe et un panneau interne assemblés l'un à l'autre et définissant un volume intérieur de l'ouvrant,
- une zone protégée appartenant au volume,
- des moyens de protection de la zone, comprenant des organes d'emboîtement mâle et femelle, respectivement ménagés sur le panneau externe et sur le panneau interne ou inversement, et agencés de manière à former une barrière d'étanchéité reliant les deux panneaux entre eux.

La zone protégée de l'ouvrant est destinée à recevoir l'organe fonctionnel à protéger de l'humidité, de l'air ou de la poussière.

Grâce à l'invention, les moyens de protection de la zone font partie des panneaux externe et interne de l'ouvrant et il n'est pas nécessaire de rapporter un matériau d'étanchéité sur les panneaux. Ces moyens de protection ne sont donc pas rapportés comme dans l'état de la technique. Ainsi, le procédé de fabrication et de montage de l'ouvrant est simplifié puisqu'il ne comprend pas d'étape de dépose d'un joint ou d'un cordon de colle.

Dans le cas où les panneaux interne et externe sont réalisés en matière plastique, les organes d'emboîtement mâle et femelle peuvent être venus de moulage avec les panneaux, c'est-à-dire qu'ils sont réalisés d'un seul tenant lors du moulage des panneaux.

La forme et le positionnement des organes d'emboîtement sur les panneaux sont déterminés en fonction de la forme de la zone à protéger et des particules contre lesquelles on souhaite protéger la zone.

Ainsi, grâce aux moyens de protection, la zone protégée est délimitée par les deux panneaux interne et externe et par les organes d'emboîtement qui relient les deux panneaux l'un à l'autre et forment une barrière étanche.

Bien entendu, les organes d'emboîtement mâle et femelle sont complémentaires l'un à l'autre et sont agencés pour que l'organe mâle puisse pénétrer dans l'organe femelle lors du montage du panneau externe sur le panneau interne. En d'autres termes, les organes mâle et femelle sont en regard l'un de l'autre.

Un ouvrant selon l'invention peut en outre comprendre l'une ou plusieurs des caractéristiques suivantes :
- L'organe femelle comprend une gorge et l'organe mâle comprend une nervure. La nervure comprend alors une base linéaire liée à l'un des panneaux et un sommet libre destiné à pénétrer dans la gorge.
- La gorge comprend une rainure ménagée dans le panneau et/ou deux nervures sensiblement parallèles ménagées en saillie du panneau. L'espace entre les deux nervures sensiblement parallèles, c'est-à-dire la largeur de la gorge, est sensiblement égal à l'épaisseur de la nervure de l'organe mâle.
- La nervure de l'organe mâle est une lèvre souple co-moulée avec le panneau. Il est avantageux que la nervure de l'organe mâle soit souple de manière à ce qu'elle puisse se déformer lorsqu'elle est emboîtée dans l'organe femelle et ainsi améliorer l'étanchéité de l'emboîtement. Par lèvre souple, on entend une lèvre réalisée en un matériau plus souple que celui utilisé pour la fabrication du panneau portant l'organe mâle. Cette lèvre peut être par exemple réalisée en EPDM (Ethylen-Propylen Diene Rubber) tandis que le panneau est réalisé en PPGF (Glass Fiber Reinforced Polypropylen). D'autres matériaux peuvent bien sûr être utilisés. En outre, grâce au fait que la lèvre est souple, cela permet de tolérer des jeux de fabrication et faciliter ainsi l'emboîtement des organes mâle et femelle sans créer de contraintes sur les panneaux portant ces organes.
- L'ouvrant comprend des moyens de guidage, lors du montage de l'ouvrant, de l'organe mâle vers l'organe femelle, les moyens de guidage étant ménagés sur le panneau portant l'organe femelle. Ces moyens de guidage permettent de faciliter le montage de l'ouvrant car, grâce à eux, l'organe mâle s'enchâsse naturellement dans l'organe femelle.
- Les moyens de guidage comprennent au moins une rampe convergeant vers l'organe femelle. Cette rampe peut par exemple converger vers la rainure formant la gorge ou vers le sommet libre d'une des deux nervures sensiblement parallèles ménagées en saillie du panneau et formant la gorge. Pour tenir compte de la surépaisseur formée par la rampe, on pourra prévoir, si on le souhaite, que la nervure vers le sommet de laquelle converge la rampe présente une hauteur légèrement inférieure à l'autre nervure formant la gorge.
- Les moyens de protection sont agencés pour isoler totalement la zone protégée du reste du volume intérieur de l'ouvrant. Dans ce cas, la zone protégée est délimitée par les deux panneaux interne et externe et par les moyens de protection qui constituent alors une paroi entourant la zone protégée. La zone protégée peut occuper un volume minoritaire du volume intérieur de l'ouvrant ou au contraire un volume majoritaire.
- L'ouvrant comprend des moyens de fixation des panneaux l'un à l'autre situés à l'extérieur de la zone protégée. Ces moyens de fixation peuvent être par exemple des moyens d'encliquetage, de vissage, de collage ou tout autre moyen connu. Il est particulièrement avantageux que ces moyens de fixation soient situés à l'extérieur de la zone protégée car ils ne perturbent ainsi pas la protection de cette zone. En effet, il est courant, par exemple dans le cas de moyens d'encliquetage ou de moyens de vissage, que des trous ou orifices doivent être ménagés dans les panneaux. Ces orifices ne permettent pas de garantir une étanchéité suffisante pour empêcher de l'eau ou de l'humidité de pénétrer dans le volume intérieur de l'ouvrant. Du fait que ces moyens de fixation sont situés à l'extérieur de la zone protégée, on est assuré que ce défaut d'étanchéité ne perturbe qu'une partie du volume intérieur de l'ouvrant qui n'a pas besoin d'être protégée.
- Les moyens de protection sont agencés pour former une barrière étanche à l'humidité et/ou à la poussière.
- Les organes mâle et femelle sont dimensionnés pour que l'organe mâle soit introduit en force dans l'organe femelle et qu'ils assurent ainsi l'étanchéité de la barrière. Avantageusement, l'organe femelle est relativement souple et déformable pour permettre son introduction en force.
- Les moyens de protection comprennent au moins deux barrières étanches supérieure et inférieure respectivement placées au-dessus et en dessous de la zone protégée lorsque l'ouvrant est en position fermée. La barrière inférieure permet de protéger la zone lors de l'ouverture de l'ouvrant dans le cas où le volume intérieur de l'ouvrant contiendrait de l'eau. Cette barrière inférieure forme alors une sorte de parapluie qui dévie l'eau et la guide en dehors de la zone protégée. Alors, après ouverture de l'ouvrant, l'eau ayant pénétré dans le volume intérieur se, retrouve à proximité du bord supérieur de l'ouvrant. La barrière étanche supérieure quant à elle permet de protéger la zone lors de la fermeture de l'ouvrant et de guider l'eau vers le bord inférieur de l'ouvrant.

L'invention a également pour objet un panneau intérieur d'un ouvrant selon l'invention et un panneau extérieur d'un ouvrant selon l'invention.

L'invention sera mieux comprise à la lecture de la description qui va suivre, donnée uniquement à titre d'exemple et faite en se référant aux dessins annexés dans lesquels :
- la figure 1 est une vue en perspective et en éclaté d'un premier mode de réalisation d'un ouvrant selon l'invention,
- la figure 2 est une vue en coupe d'un détail de l'ouvrant de la figure 1,
- la figure 3 est une vue en coupe d'un détail d'un ouvrant selon une variante du premier mode de réalisation de l'invention,
- la figure 4 est une vue en perspective d'une partie de l'ouvrant représenté sur la figure 3,
- la figure 5 est une vue de détail d'une autre variante de l'ouvrant représenté sur la figure 1,
- la figure 6 est une vue en perspective et en éclaté d'une autre variante de l'ouvrant représenté sur la figure 1,
- la figure 7 est une vue en perspective d'un panneau interne d'un ouvrant selon un second mode de réalisation de l'invention.

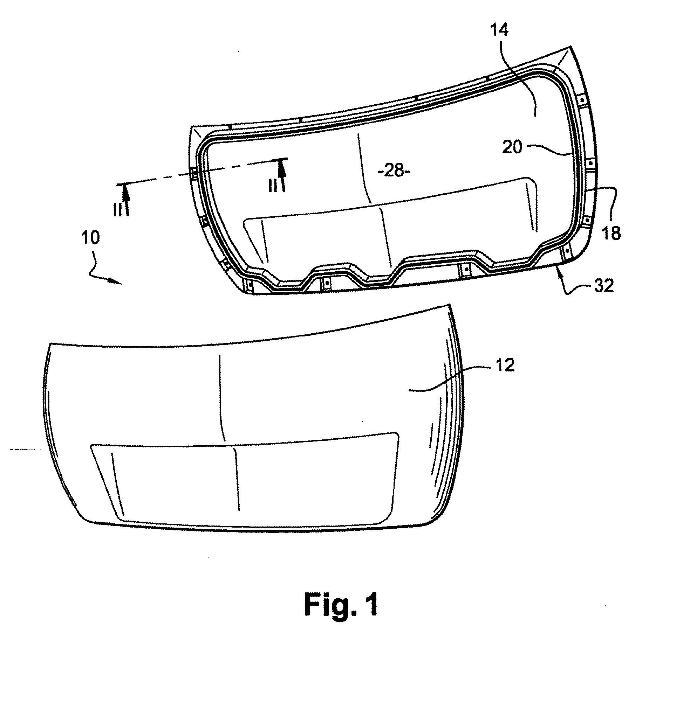

On a représenté sur la figure 1 un ouvrant 10 arrière de véhicule automobile selon un premier mode de réalisation de l'invention. L'ouvrant 10 comprend un panneau externe 12 et un panneau interne 14 réalisés tous deux par moulage de matière plastique. Le panneau 12 est dit externe car il est visible depuis l'extérieur du véhicule lorsque l'ouvrant est en position fermée et le panneau 14 est dit interne car il est visible depuis l'intérieur du véhicule lorsque l'ouvrant est en position fermée.

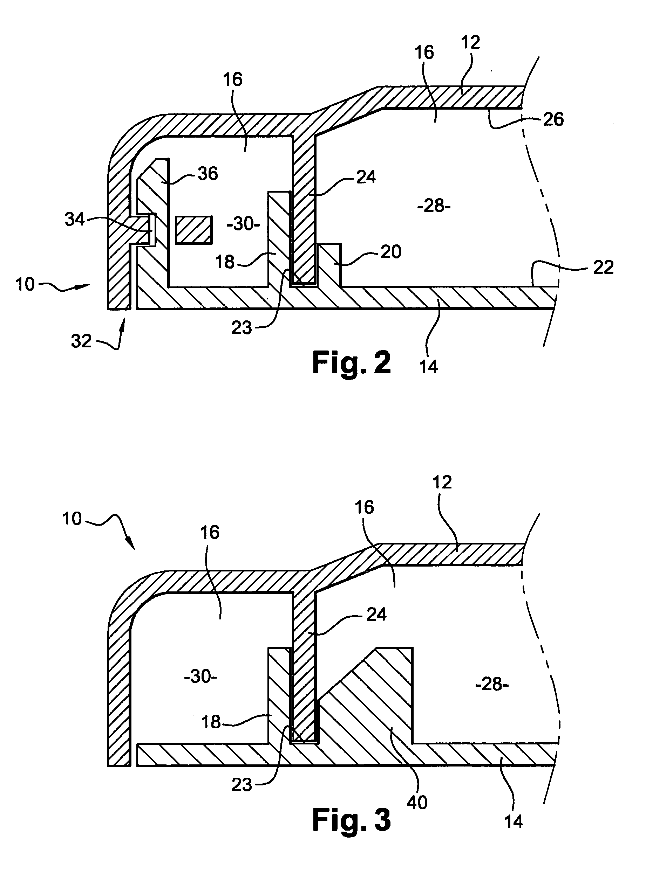

Comme représenté sur la figure 2, lorsque le panneau externe 12 et le panneau interne 14 sont assemblés l'un à l'autre, ils définissent une cavité formant un volume intérieur 16 à l'ouvrant 10.

Le panneau intérieur 14 comprend, au voisinage de sa périphérie, deux nervures 18 et 20 en saillie d'une face 22 du panneau 14 orientée vers le volume intérieur 16. Les deux nervures 18 et 20 sont sensiblement parallèles l'une à l'autre et suivent sensiblement les contours du panneau intérieur 14. Les deux nervures 18 et 20 définissent une gorge 23 périphérique du panneau 14.

Le panneau externe 12 comprend une nervure 24 en saillie d'une face 6 orientée vers le volume intérieur 16 et s'étendant en périphérie de la bordure du panneau 12 en suivant sensiblement ses contours.

La gorge 23, c'est-à-dire les deux nervures 18 et 20, ainsi que la nervure 24, sont agencées respectivement sur le panneau 14 et sur le panneau 12 de manière à ce que, lorsque les deux panneaux 12 et 14 sont assemblés l'un à l'autre, la nervure 24 est en regard de la gorge 23 de manière à ce que la nervure 24 s'emboîte dans la gorge 23. En d'autres termes, la nervure 24 et la gorge 23 forment respectivement des organes d'emboîtement mâle et femelle. De préférence, l'épaisseur de la nervure 24 est dimensionnée de manière à être légèrement supérieure à la largeur de la gorge 23 de sorte que la nervure 24 est introduite en force dans la gorge 23. Du fait que la nervure 24 est introduite en force dans la gorge 23, cela constitue une barrière périphérique d'étanchéité reliant les deux panneaux entre eux et séparant le volume 16 en une zone protégée 28 entourée par la barrière étanche et une zone 30 vulnérable car située à l'extérieur de la barrière étanche.

L'ouvrant 10 comprend, à l'extérieur de la barrière étanche formée par les nervures 18, 20 et 24, des moyens 32 de fixation des panneaux 12 et 14 l'un à l'autre. Ces moyens de fixation comprennent une lumière 34 ménagée dans le panneau externe 12 et une languette 36 ménagée dans le panneau interne 14 et destinée à coopérer par encliquetage avec la lumière 34. Du fait de la lumière 34, l'eau ou de l'humidité peut pénétrer à l'intérieur de la zone vulnérable 30. Toutefois, grâce à la barrière étanche formée par l'assemblage des nervures 18, 20 et 24, l'eau éventuellement contenue dans la zone vulnérable 30 ne peut pénétrer dans la zone protégée 28 qui reste ainsi sèche. Grâce au fait que la zone protégée 28 est sèche, on peut y loger différents éléments fonctionnels tels qu'un moteur à essuie-glace qui est généralement sensible à l'humidité.

Le panneau interne 14 est muni de moyens 38 de guidage, lors du montage de l'ouvrant 10 de la nervure 24 du panneau externe 12 vers la gorge 23. Les moyens 38 de guidage comprennent une pluralité de rampes 40 formées par des nervures en saillie de la surface 22 du panneau 14, les nervures étant sensiblement normales à la surface 22 et à la direction principale de la gorge 23. Les rampes 40 sont agencées pour converger vers la gorge 23. Pour cela, les rampes 40 convergent vers le sommet de la nervure 20 définissant la gorge 23. Ainsi, grâce à la présence des rampes 40, la nervure 24 est guidée vers la gorge 23 lors de l'assemblage de l'ouvrant 10. Cela facilite donc le positionnement des deux panneaux externe et interne l'un par rapport à l'autre lors du montage de l'ouvrant.

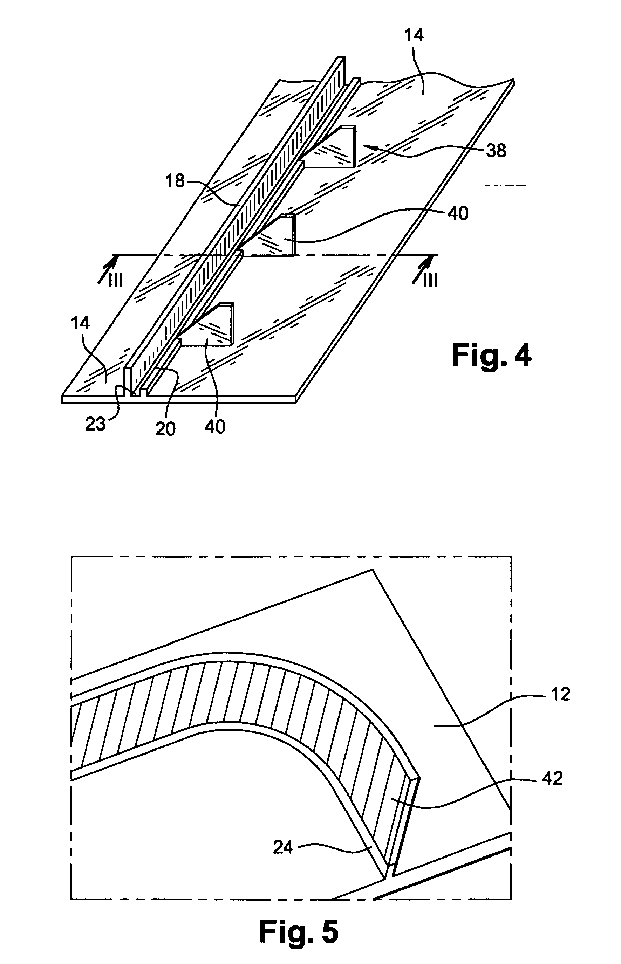

Selon une variante représentée sur la figure 5, le panneau externe 12 comprend une nervure 24 de faible hauteur prolongée par une lèvre souple 42 co-moulée avec la nervure 24. La lèvre 42 est plus souple que la nervure 24. Du fait de sa souplesse, il est plus aisé de l'introduire en force dans la gorge 23 ménagée à la surface du panneau 14. Ainsi, du fait que le matériau utilisé pour réaliser la lèvre souple 42 est apte à se comprimer lors de son introduction dans la gorge 23, mais qu'il est également apte à se dilater une fois en position, l'étanchéité s'en trouve améliorée car la lèvre 42 est parfaitement ajustée à la gorge 23.

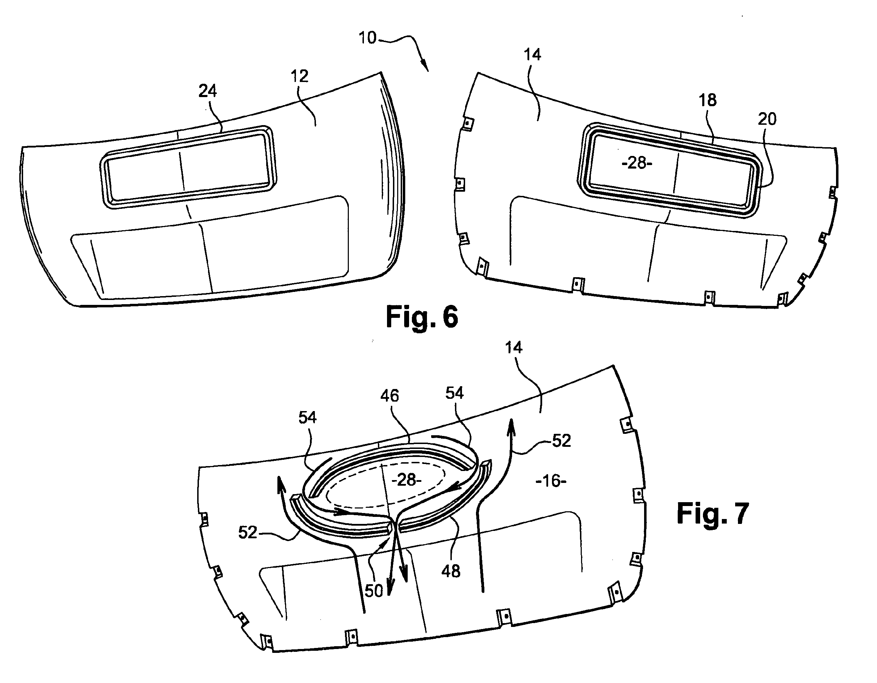

Alors que dans la variante de réalisation représentée sur la figure 1, l'ouvrant 10 comprenait une zone protégée 28 qui occupait quasiment la totalité du volume intérieur à l'ouvrant 10, on a représenté sur la figure 6 une variante de l'invention dans laquelle la zone protégée 28 est réduite et localisée autour d'un organe fonctionnel défini. On peut également prévoir de munir l'ouvrant de plusieurs zones protégées de petite taille localisées en des emplacements spécifiques de l'ouvrant.

On a représenté sur la figure 7 un panneau interne 14 d'un ouvrant 10 selon un second mode de réalisation de l'invention.

Dans ce second mode de réalisation, la zone protégée 28 n'est pas totalement isolée du reste du volume intérieur 16 à l'ouvrant 10. En d'autres termes, une fois les deux panneaux interne et externe assemblés l'un à l'autre, les moyens de protection de la zone protégée 28 n'entourent pas totalement la zone protégée 28.

Dans ce mode de réalisation, les moyens de protection de la zone 28 comprennent une barrière étanche supérieure 46 et une barrière étanche inférieure 48, respectivement placées au-dessus et en dessous de la zone protégée 28 lorsque l'ouvrant 10 est en position fermée. Les deux barrières 46 et 48 sont formées de la même manière que dans le premier mode de réalisation, c'est-à-dire par une nervure ménagée en saillie du panneau externe 12 et destinée à coopérer par emboîtement avec une gorge ménagée dans le panneau interne 14, la gorge étant formée par deux nervures sensiblement parallèles.

En outre, la barrière inférieure 48 est interrompue en son centre par un canal d'écoulement 50. Les deux barrières 46 et 48 sont en forme d'arc de cercle dont les concavités se font face et entourent la zone protégée 28.

La barrière étanche supérieure 46 est conformée de manière à ce que ses deux extrémités s'étendent vers la concavité de la barrière inférieure 48.

Lorsque l'ouvrant 10 est en position fermée, de l'eau éventuellement contenue dans le volume intérieur 16 stagne en partie inférieure du volume intérieur de l'ouvrant. Lors de l'ouverture de l'ouvrant, l'eau se déplace vers la partie supérieure de l'ouvrant. L'eau est alors guidée dans son déplacement par la barrière inférieure 48 conformément au trajet représenté par la flèche 52 jusqu'à la partie supérieure de l'ouvrant. On constate que la barrière d'étanchéité permet de protéger la zone 28 et de l'abriter de l'eau. Lors de la fermeture de l'ouvrant 10, l'eau stagnante située dans la partie supérieure du volume intérieur de l'ouvrant s'écoule vers la partie inférieure en étant guidée au centre de l'ouvrant par la barrière étanche supérieure 46 conformément au trajet symbolisé par les flèches 54. On constate que la barrière supérieure 46 tend à guider l'eau vers la partie concave de la barrière inférieure 48 qui guide elle-même l'eau vers le canal d'écoulement 50 vers la partie inférieure de l'ouvrant. On constate que la barrière supérieure 46 permet d'éviter à de l'eau de s'écouler dans la zone protégée 28 qui reste donc à l'abri de l'eau.

Ainsi, les deux barrières 46 et 48 forment donc bien des moyens de protection de la zone protégée 28, bien que la zone 28 ne soit pas hermétiquement isolée du reste du volume intérieur 16 de l'ouvrant.

Ce mode de réalisation est particulièrement avantageux car il permet de protéger une zone 28 de l'ouvrant en utilisant des barrières étanches de faibles dimensions qui n'entourent pas nécessairement toute la zone 28. Par ailleurs, on constate que le rayon de courbure des barrières peut être relativement grand. En d'autres termes, il n'existe pas d'angle aigu dans ces barrières. Cela permet ainsi de faciliter l'emboîtement des nervures dans les gorges, emboîtement qui est en général rendu difficile par la présence d'angles vifs.

Bien entendu, ce second mode de réalisation pourra faire l'objet des mêmes variantes que celles mentionnées en relation au premier mode de réalisation. En particulier, la nervure 24 portée par le panneau externe peut être prolongée par une lèvre souple co-moulée et le panneau interne peut comprendre des moyens de guidage vers la gorge.

On notera enfin que, dans les deux modes de réalisation qui viennent d'être décrits, les gorges étaient portées par le panneau intérieur tandis que les nervures étaient portées par le panneau extérieur. Il est évident que l'on pourra également réaliser l'inverse, c'est-à-dire faire porter la nervure par le panneau interne et la gorge par le panneau externe.

Par ailleurs, dans les deux modes de réalisation qui ont été décrits, la gorge est ménagée entre deux nervures en saillie. La gorge pourrait être également réalisée par une rainure ménagée en surface du panneau.

## Revendications

1. Ouvrant (10) arrière de véhicule automobile, **caractérisé en ce qu'**il comprend :
- un panneau externe (12) et un panneau interne (14) assemblés l'un à l'autre et définissant un volume intérieur (16) de l'ouvrant (10),
- une zone protégée (28) appartenant au volume (16),
- des moyens (18, 20, 23, 24 ; 46, 48) de protection de la zone (28), comprenant des organes d'emboîtement mâle (24) et femelle (23), respectivement ménagés sur le panneau externe (12) et sur le panneau interne (14) ou inversement, et agencés de manière à former une barrière d'étanchéité reliant les deux panneaux (12, 14) entre eux, et
- des moyens de guidage (38, 40), lors du montage de l'ouvrant (12), de l'organe mâle (24) vers l'organe femelle (23), les moyens de guidage (38, 40) étant ménagés sur le panneau (12, 14) portant l'organe femelle (23).

2. Ouvrant (10) selon la revendication précédente, dans lequel l'organe femelle (23) comprend une gorge (23) et l'organe mâle (24) comprend une nervure (24).

3. Ouvrant (10) selon la revendication précédente, dans lequel la gorge (23) comprend une rainure ménagée dans le panneau et/ou deux nervures (18, 20) sensiblement parallèles ménagées en saillie du panneau (12, 14).

4. Ouvrant (10) selon l'une quelconque des revendications précédentes, dans lequel la nervure (24) de l'organe mâle (24) est une lèvre souple (42) co-moulée avec le panneau (12, 14).

5. Ouvrant (10) selon l'une quelconque des revendications précédentes, dans lequel les moyens de guidage (38, 40) comprennent au moins une rampe (40) convergeant vers l'organe femelle (23).

6. Ouvrant (10) selon l'une quelconque des revendications précédentes, dans lequel les moyens de protection (18, 20, 23, 24) sont agencés pour isoler totalement la zone protégée (28) du reste du volume intérieur (16) de l'ouvrant (10).

7. Ouvrant (10) selon l'une quelconque des revendications précédentes, comprenant des moyens de fixation (34, 36) des panneaux (12, 14) l'un à l'autre, situés à l'extérieur de la zone protégée (28).

8. Ouvrant (10) selon l'une quelconque des revendications précédentes, dans lequel les moyens de protection (18, 20, 23, 24 ; 46, 48) sont agencés pour former une barrière étanche à l'humidité et/ou à la poussière.

9. Ouvrant (10) selon la revendication précédente, dans lequel les organes mâle (24) et femelle (23) sont dimensionnés pour que l'organe mâle (24) soit introduit en force dans l'organe femelle (23) et qu'ils assurent ainsi l'étanchéité de la barrière.

10. Ouvrant (10) selon l'une quelconque des revendications 8 et 9, dans lequel les moyens de protection (18, 20, 23, 24 ; 46, 48) comprennent au moins deux barrières étanches supérieure (46) et inférieure (48) respectivement placées au dessus et en dessous de la zone protégée (28) lorsque l'ouvrant (10) est en position fermée.

## Claims

1. Motor vehicle rear door (10), **characterized in that** it comprises:
• an outer panel (12) and an inner panel (14) assembled to each other and defining an inside volume (16) of the door (10);
• a protected zone (28) forming part of the volume (16) ;
• protection means (18, 20, 23, 24; 46, 48) for protecting the zone (28), and comprising male and female engagement members (24 and 23) formed respectively on the outer panel (12) and on the inner panel (14), or vice versa, and arranged so as to form a sealing barrier interconnecting the two panels (12, 14); and
• guide means (38, 40) for use during assembly of the door (12) to guide the male member (24) towards the female member (23), the guide means (38, 40) being formed on the panel (12, 14) carrying the female member (23).

2. Door (10) according to the preceding claim, wherein the female member (23) comprises a groove (23) and the male member (24) comprises a rib (24).

3. Door (10) according to the preceding claim, wherein the groove (23) comprises a groove formed in the panel and/or two substantially-parallel ribs (18, 20) formed to project from the panel (12, 14).

4. Door (10) according to any preceding claim, wherein the rib (24) of the male member (24) is a flexible lip (42) co-molded with the panel (12, 14).

5. Door (10) according to any preceding claim, wherein the guide means (38, 40) comprise at least one ramp (40) converging towards the female member (23).

6. Door (10) according to any preceding claim, wherein the protection means (18, 20, 23, 24) are arranged to isolate the protected zone (28) totally from the remainder of the inside volume (16) of the door (10).

7. Door (10) according to any preceding claim, including fastener means (34, 36) for fastening the panels (12, 14) to each other, the fastener means being situated outside the protected zone (28).

8. Door (10) according to any preceding claim, wherein the protection means (18, 20, 23, 24; 46, 48) are arranged to form a moisture and/or dust-proof barrier.

9. Door (10) according to the preceding claim, wherein the male and female members (24, 23) are dimensioned so that the male member (24) is inserted by force into the female member (23) and so that they thereby provide the sealing of the barrier.

10. Door (10) according to claim 8 or claim 9, wherein the protection means (18, 20, 23, 24; 46, 48) comprise at least two sealing barriers, an upper barrier (46) and a lower barrier (48) placed respectively above and below the protected zone (28) when the door (10) is in the closed position.

## Patentansprüche

1. Heckklappe (10) eines Kraftfahrzeugs, **dadurch gekennzeichnet, dass** sie Folgendes aufweist:
- eine Außenplatte (12) und eine Innenplatte (14), die miteinander zusammengefügt sind und ein Innenvolumen (16) der Heckklappe (10) definieren,
- eine geschützte Zone (28), die zu dem Volumen (16) gehört,
- Mittel (18, 20, 23, 24; 46, 48) zum Schützen der Zone (28), die Steckelemente (24) und Buchsenelemente (23) aufweisen, die jeweils an der Außenplatte (12) und an der Innenplatte (14) oder umgekehrt eingerichtet und dazu ausgebildet sind, um eine Dichtigkeitsbarriere zu bilden, die die zwei Platten (12, 14) untereinander verbindet, und
- Mittel (38, 40) zum Führen bei der Montage der Heckklappe (12) des Steckelements (24) zu dem Buchsenelement (23), wobei die Führungsmittel (38, 40) an der Platte (12, 14), die das Buchsenelement (23) trägt, eingerichtet sind.

2. Heckklappe (10) nach dem vorhergehenden Anspruch, bei der das Buchsenelement (23) eine Hohlkehle (23) aufweist und das Steckelement (24) eine Rippe (24) aufweist.

3. Heckklappe (10) nach dem vorhergehenden Anspruch, bei der die Hohlkehle (23) eine Rille aufweist, die in der Platte eingerichtet ist, und/oder zwei Rippen (18, 20), die im Wesentlichen parallel sind und von der Platte (12, 14) vorstehend eingerichtet sind.

4. Heckklappe (10) nach einem der vorhergehenden Ansprüche, bei der die Rippe (24) des Steckelements (24) eine biegsame Lippe (42) ist, die gemeinsam mit der Platte (12, 14) geformt ist.

5. Heckklappe (10) nach einem der vorhergehenden Ansprüche, bei der die Führungsmittel (38, 40) mindestens eine Rampe (40) aufweisen, die zu dem Buchsenelement (23) konvergiert.

6. Heckklappe (10) nach einem der vorhergehenden Ansprüche, bei der die Schutzmittel (18, 20, 23, 24) eingerichtet sind, um die geschützte Zone (28) komplett von dem Rest des Innenvolumens (16) der Heckklappe (10) zu isolieren.

7. Heckklappe (10) nach einem der vorhergehenden Ansprüche, die Mittel (34, 36) zum Befestigen der Platten (12, 14) aneinander aufweist, die außerhalb der geschützten Zone (28) liegen.

8. Heckklappe (10) nach einem der vorhergehenden Ansprüche, bei der die Schutzmittel (18, 20, 23, 24; 46, 48) eingerichtet sind, um eine feuchtigkeits- und/oder staubdichte Barriere zu bilden.

9. Heckklappe (10) nach dem vorhergehenden Anspruch, bei der die Steckelemente (24) und die Buchsenelemente (23) so bemessen sind, dass das Steckelement (24) unter Kraftanwendung in das Buchsenelement (23) eingeführt wird, und dass sie daher die Dichtigkeit der Barriere sicherstellen.

10. Heckklappe (10) nach einem der Ansprüche 8 und 9, bei der die Schutzmittel (18, 20, 23, 24; 46, 48) mindestens zwei obere (46) und untere (48) dichte Barrieren aufweist, die jeweils oberhalb und unterhalb der geschützten Zone (28) platziert sind, wenn die Heckklappe (10) in geschlossener Position ist.
